(19) Europäisches Patentamt / European Patent Office / Office européen des brevets

(11) **EP 1 455 478 B1**

(12) **FASCICULE DE BREVET EUROPEEN**

(45) Date de publication et mention de la délivrance du brevet:
**03.09.2008 Bulletin 2008/36**

(51) Int Cl.:
***H04L 9/06*** *(2006.01)*

(21) Numéro de dépôt: **04100189.2**

(22) Date de dépôt: **21.01.2004**

(54) **Procédé de cryptage d'un mot comportant N digits**

Verfahren zur Verschlüsselung eines N-stelligen Datenwortes

Method for the encryption of an N-digit word

(84) Etats contractants désignés:
**AT BE BG CH CY CZ DE DK EE ES FI FR GB GR HU IE IT LI LU MC NL PT RO SE SI SK TR**

(30) Priorité: **27.02.2003 FR 0350038**

(43) Date de publication de la demande:
**08.09.2004 Bulletin 2004/37**

(73) Titulaire: **Societé Française du Radiotéléphone 92915 Paris la Défense Cedex (FR)**

(72) Inventeur: **WARY, Jean-Philippe 92340, BOURG LA REINE (FR)**

(74) Mandataire: **Schmit, Christian Norbert Marie SCHMIT CHRETIEN 8, place du Ponceau 95000 Cergy (FR)**

(56) Documents cités:
- **ANDERSON R ; BIHAM E: "Two practical and provably secure block ciphers: BEAR and LION" FAST SOFTWARE ENCRYPTION. THIRD INTERNATIONAL WORKSHOP PROCEEDINGS, SPRINGER-VERLAG, 23 février 1996 (1996-02-23), pages 113-120, XP002251409 Cambridge, UK ISBN: 3-540-60865-6**
- **ADAMS C: "The SHADE cipher: an efficient hash-function-based Feistel network" ELECTRICAL AND COMPUTER ENGINEERING, 1997. ENGINEERING INNOVATION: VOYAGE OF DISCOVERY. IEEE 1997 CANADIAN CONFERENCE ON ST. JOHNS, NFLD., CANADA 25-28 MAY 1997, NEW YORK, NY, USA,IEEE, US, 25 mai 1997 (1997-05-25), pages 338-342, XP010235183 ISBN: 0-7803-3716-6**
- **LUCKS S: "Faster Luby-Rackoff ciphers" FAST SOFTWARE ENCRYPTION. THIRD INTERNATIONAL WORKSHOP PROCEEDINGS, SPRINGER-VERLAG, [Online] 23 février 1996 (1996-02-23), pages 1-16, XP002251410 Cambridge, UK ISBN: 3-540-60865-6 Extrait de l'Internet: URL:http://www.springerlink.com/> [extrait le 2003-08-26]**
- **BLACK J; ROGAWAY P: "CIPHERS WITH ARBITRARY FINITE DOMAINs" TOPICS IN CRYPTOLOGY- CT-RSA 2002; THE CRYPTOGRAPHERS' TRACK AT THE RSA CONFERENCE 2002, PROCEEDINGS; SPRINGER-VERLAG, LECTURE NOTES IN COMPUTER SCIENCE, vol. 2271, 18 février 2002 (2002-02-18), - 22 février 2002 (2002-02-22) pages 114-130, San Jose, CA, USA ISBN: 3-540-43224-8**

**Description**

L'invention a pour objet un procédé de calcul pseudo-aléatoire d'une permutation d'un mot comportant N digits. Le domaine de l'invention est celui de la cryptographie. Plus particulièrement le domaine de l'invention est celui de la cryptographie appliquée au cryptage de mots composés de digits.

Un but de l'invention est de permettre le cryptage robuste d'un mot composé de N digits, N étant compris dans l'intervalle [7, 30].

Un autre but de l'invention est de fournir un cryptage rapide d'un mot composé de N digits, N étant compris dans l'intervalle [7, 30].

Un autre but de l'invention est de déterminer une permutation pseudo-aléatoire robuste dans un ensemble de cardinal $10^N$, ce cardinal n'est donc pas une puissance de 2.

Un autre but de l'invention est de réaliser le chiffrement d'identifiants basés sur l'emploi de digits, comme par exemple des numéros de téléphone.

Un autre but de l'invention est de générer une chaîne de N digits qui soit pseudo-aléatoire, c'est à dire que pour une personne qui ne connaît pas la clé secrète qui a été utilisée pour générer cette chaîne, cette chaîne n'est en pratique pas distinguable d'une chaîne réellement aléatoire.

Un autre but de l'invention est de produire des chaînes de N digits telles que le processus de production garantisse que la même chaîne ne sera pas produite deux fois.

Dans l'état de la technique, on entend par bit une grandeur pouvant prendre la valeur 0, ou la valeur 1. Ces deux valeurs sont physiquement représentées, dans un ordinateur ou une mémoire, par un signal électrique pouvant prendre 2 valeurs, l'une associée à 0, l'autre associée à 1. Un mot binaire est une succession ordonnée de bits.

Un digit est une grandeur pouvant prendre l'une des valeurs suivantes 0, 1, 2, 3, 4, 5, 6, 7, 8, 9. Un digit peut être codé par des bits. Alors, dans ce cas, à chaque digit correspond un mot binaire. En général ce mot binaire est long de 4 bits, mais il peut s'agir d'un mot binaire long de 8 bits (code ASCII) ou plus. Un mot en digits est une succession ordonnée de digits.

Une permutation est une bijection sur un ensemble fini.

On nomme «permutation pseudo-aléatoire» une permutation qui est générée par un programme informatique assez simple à calculer à partir d'une clé secrète K, ayant la propriété suivante : une personne qui ne connaît pas la clé K est en pratique incapable de distinguer une telle permutation d'une permutation réellement aléatoire (avec les mêmes tailles d'entrée et de sortie), car le nombre de calculs à faire pour les distinguer par les méthodes connues est supérieur à ce qui est faisable de façon réaliste.

Actuellement, on considère que s'il faut faire $2^{80}$ calculs élémentaires (ou plus) pour résoudre un problème, ce nombre de calculs est trop grand pour des attaquants éventuels.

Dans l'état de la technique on connaît des permutations dans des ensembles dont le nombre d'éléments est une puissance de 2. On connaît aussi des tentatives pour adapter ces permutations à des ensembles dont le nombre d'éléments n'est pas une puissance de 2. Une telle technique, pour chiffrer les éléments d'un ensemble E comportant n éléments, consiste à utiliser une permutation P travaillant sur un sur-ensemble SE de E comportant un nombre d'éléments en puissance de 2. Pour déterminer Ck(x), c'est-à-dire le cryptage de x appartenant E avec la clé k, on commence par calculer le n-uplet V, avec

$$V = \{ Pk(i) \}, \text{ où i décrit E.}$$

où i décrit E.

Comme tous les éléments de V sont différents, on produit un n-uplet W en remplaçant chaque élément de V par le rang de cet élément dans oV, où oV est le n-uplet V ordonné. Alors on obtient que Ck(x) est le x-ième élément de W.

Un inconvénient de cette méthode est que pour chiffrer/déchiffrer un mot, il faut chiffrer/déchiffrer tous les mots de l'ensemble de départ. Cela conduit à des temps de calcul importants et prohibitifs. De tels calculs prennent en effet beaucoup de temps ce qui réduit les temps de réponses d'un serveur, dans une application client serveur. Si le client est un appareil portable autonome tel qu'un téléphone mobile, et que le client doive mettre en oeuvre un tel procédé, cela est encore plus préjudiciable car le client dispose de moins de puissance de calcul qu'un serveur.

Une autre méthode connue pour réaliser une permutation d'un ensemble E comportant un nombre d'éléments n'étant pas une puissance de 2 est de considérer un sur-ensemble SE de E, où SE comporte un nombre d'éléments étant une puissance de 2, et une permutation P de l'ensemble SE. Alors Ck(x), c'est-à-dire le chiffrement de x pour une clé k, est obtenu par l'algorithme récursif suivant:

Algorithme Ck(x)

$$y = Pk(x)$$

si y est dans E alors renvoyer y
sinon renvoyer Ck(y)
fin

La faiblesse de cette méthode réside dans le temps de convergence de l'algorithme utilisé. En effet, il peut arriver qu'il faille effectuer beaucoup de calculs et dans ce cas le temps de calcul devient prohibitif.

Dans l'état de la technique on connaît d'autres solutions de chiffrement non basées sur des permutations, c'est-à-dire non basées sur des bijections. Cependant dans la mesure où l'on cherche à effectuer un cryptage réversible il faut s'assurer que le résultat d'un chiffrement est unique. Ainsi, actuellement, dans certaines applications, certains industriels ou opérateurs, pour garantir l'unicité du chiffrement stockent depuis des années toutes le chaînes de digits générées. Ils peuvent ainsi s'assurer que chaque chaîne est nouvelle car s'ils génèrent une chaîne déjà utilisée, ils le détectent et ne mettent pas cette chaîne à nouveau en circulation, mais génèrent une autre chaîne. Mais un tel procédé est coûteux et se révèle à la longue peu commode car il faut vite disposer de beaucoup de mémoire, et avoir des moyens de sauvegarde importants et rapidement accessibles dans des locaux très sécurisés. De plus le nombre de calculs à faire croît avec le nombre de valeurs déjà générées, et donc croît avec le temps.

En particulier, ces trois solutions ne présentent pas de bonnes performances pour ce qui est de générer des permutations sur des numéros de type carte bleue ou des numéros de téléphone. En effet, le nombre de calculs à effectuer peut être prohibitif et la sécurité cryptographique non assurée. Au lieu de ces trois solutions, il est possible d'utiliser un générateur de permutations pseudo-aléatoires sur des digits, comme nous allons le décrire. Le fait que deux fois la même valeur ne soit pas générée sera garanti par le caractère bijectif du générateur (il génère des permutations).

Actuellement toutes les fonctions cryptographiques standards, en cryptographie à clé secrète, prennent en entrée un certain nombre de bits, et donnent en sortie un certain nombre de bits. C'est le cas par exemple de la fonction SHA-1, de la fonction DES, de la fonction AES,... . Or dans certaines applications industrielles, par exemple en téléphonie, on souhaite avoir en entrée et en sortie non pas un certain nombre de bits, mais un certain nombre de digits. Pour cela une solution serait de réécrire des fonctions spécifiques, mais leur étude peut prendre beaucoup de temps, et elles auront forcément été beaucoup moins analysées par la communauté cryptographique internationale. Ou bien, selon l'invention, l'on peut construire des schémas qui vont avoir des entrées et des sorties sur des digits, mais qui vont utiliser en interne des fonctions cryptographiques classiques sur des bits pour assurer la sécurité. C'est une telle méthode, pour un problème particulier, qui est mise en oeuvre ici.

Black et Rogaway, dans: "Ciphers with Arbitrary Finite Domains" (Topics in Cryptology, CT-RSA 2002; The Cryptographers' Track at the RSA Conference 2002, Proceedings; Springer-Verlag, Lecture Notes in Computer Science, Vol. 2271; 18/22.02.2002; San Jose, CA, USA; ISBN 3-540-43224-8; pages 114-130), décrivent un procédé de génération d'une permutation pseudo-aléatoire d'un mot comportant un certain nombre de digits et mettant en oeuvre un schéma de Feistel généralisé.

Pour une meilleure appréhension du sujet et de l'objet de la présente invention, il est ici succinctement rappelé quelques notions relatives aux schémas de Feistel. Tout d'abord, définissons ce que l'on nomme un schéma de Feistel.

Soit n un entier naturel. Notons $I_n = \{0, 1\}^n$ l'ensemble des chaînes de n bits.

Soit $f_1$ une fonction quelconque de $I_n$ vers $I_n$.

Soient G et D deux éléments de $I_n$.

On note [G, D] l'élément de $I_{2n}$ dont les n premiers bits valent G, et les n suivants valent D.

On note $\psi(f_1)$ la bijection de $I_{2n}$ vers $I_{2n}$ telle que : pour tout [G, D] de $I_{2n}$, et pour tout [U, V] de $I_{2n}$, $\psi(f_1)[G,D] = [U, V]$ si et seulement si :

$$S = D \text{ et } T = G \oplus f_1(D),$$

où $\oplus$ désigne l'opération «XOR» (ou addition bits à bits modulo 2).

$\psi(f_1)$ est bien une bijection, car la fonction inverse est la fonction g telle que :

$$g[U, V] = [T \oplus f_1(S), S] = [G, D].$$

Enfin, T étant un entier, que l'on nommera le nombre de tours du schéma de Feistel, et $f_1, f_2,..., f_T$ étant T fonctions de $I_n$ vers $I_n$, que l'on nommera les T fonctions de tours, on note $\psi(f_1, f_2,...f_T)$ la bijection suivante de $I_{2n}$ vers $I_{2n}$ :

$$\psi(f_1, f_2,...f_T) = \psi(f_T) \ldots \circ \psi(f_2) \circ \psi(f_1),$$

où désigne la loi de composition des fonctions.

La bijection $\psi(f_1, f_2,...f_T)$ est nommée « schéma de Feistel en T tours ».

Définissons à présent ce que l'on nomme un schéma de Feistel généralisé. L'idée qui sous-tend cette forme différente du schéma de Feistel est la suivante. Au lieu de couper en deux parties égales de n bits, afin d'obtenir 2n bits, on peut plus généralement à chaque tour couper en une partie de a bits, et une autre de b bits, avec a + b = N ( N : étant dans ce cas le nombre total de bits de l'entrée et de la sortie). Il est également possible de faire varier a et b suivant le numéro i de tour, les valeurs de a et b variant selon les tours seront notées $a_i$ et $b_i$. On obtient alors ce que l'on nomme un schéma de Feistel généralisé. Cette définition peut être précisée comme ci-dessous :

n étant un entier naturel quelconque, on note toujours $I_n = \{0, 1\}^n$ l'ensemble des chaînes de n bits.

Soient a, b et n trois entiers naturels tels que : a + b = n.

Soit $f_1$ une fonction quelconque de $I_b$ vers $I_a$.

Soit G un élément de $I_a$, et D un élément de $I_b$.

On note [G, D] l'élément de $I_n$ dont les a pre-

miers bits valent G, et les b suivants valent D.

On note $\psi'(f_1)$ la bijection de $I_n$ vers $I_n$ telle que : pour tout [G, D] de $I_n$, et pour tout [U, V] de $I_n$, $\psi'(f_1)$[G, D] = [U, V] si et seulement si :

$$U = G \oplus f_1(D), \text{ et } V = D$$

où $\oplus$ désigne l'opération «XOR» (ou addition bits à bits modulo 2).

Et $\lambda$ étant la fonction qui fait une rotation sur les bits de a bits (le nouveau premier bit est l'ancien $(a+1)^{ième}$ bit, le nouveau deuxième bit est l'ancien $(a + 2)^{ième}$ bit etc.), on note :

$$\psi(f_1) = \grave{\lambda} \circ \psi'(f_1)$$

Enfin, T étant un entier, que l'on nommera le nombre de tours du schéma de Feistel généralisé, et $f_i$, , $1 \le i \le T$, étant T fonctions de $I_{bi}$ vers $I_{ai}$, que l'on nommera les T fonctions de tours, on note $\psi(f_1, f_2,...f_T)$ la bijection suivante de $I_{2n}$ vers $I_{2n}$ :

$$\psi(f_1, f_2,...f_T) = \psi(f_T)... \circ \psi(f_2) \circ \psi(f_1),$$

où désigne la loi de composition des fonctions.

La bijection $\psi(f_1, f_2,...f_T)$ est nommée «schéma de Feistel généralisé en T tours».

Il peut être également ici envisagé des cas particuliers de schémas de Feistel généralisés, par exemple alternant a bits et b bits. Ainsi, il est aussi possible de faire alterner des fonctions qui changent a bits, et des fonctions qui changent b bits comme présenté ci-dessous.

Ainsi par exemple, tous les tours impairs on pourra avoir une transformation du type :

$$\psi(f_i)[G,D] = [U, V]$$

si et seulement si :

$$U = G \oplus f_i(D) \text{ et } V = D,$$

où $f_i$ est une fonction de $I_b$ vers $I_a$, et tous les tours pairs on pourra avoir une transformation du type :

$$\psi(f_j)[G,D] = [U, V]$$

si et seulement si :

$$U = G \text{ et } V = D \oplus f_j(G),$$

où $f_j$ est une fonction de $I_a$ vers $I_b$.

Dans l'invention on résout ces problèmes en utilisant un schéma de Feistel généralisé. Le schéma de Feistel généralisé utilisé est un schéma comportant au minimum 5 tours, et dans un exemple préféré 6 tours. Une meilleure résistance à l'analyse cryptographique est cependant parfois obtenue avec un nombre de tours plus élevé. Aussi on peut aller jusqu'à un nombre de 30 tours pour rester dans des temps de calcul compatibles avec des temps de réponse d'un système mettant en oeuvre l'invention. Les fonctions de tour du schéma de Feistel généralisé prennent en entrée a digits et donnent en sortie b digits. Elles sont réalisées de la façon suivante, sachant que ces fonctions doivent travailler sur des mots binaires :

1. on calcule un mot binaire A à partir de ces b digits, d'une clé K et du numéro i de tour, il s'agit par exemple ici d'une simple conversion en binaire de la concaténation de ces valeurs,
2. on calcule B=f(A), où f est une fonction à sens unique sur des bits, cette étape est en général l'étape la plus importante pour la sécurité du fait du caractère à sens unique de la fonction f,
3. on calcule C=g(B), où g est une fonction qui prend en entrée un mot binaire et donne en sortie un mot comportant a digits, il s'agit par exemple ici d'une simple conversion en digits d'un mot binaire, on prendra souvent pour l'étape 2 une fonction f telle que B a exactement le format adapté à une telle conversion directe.

Ainsi, les mots binaires de sortie de fonctions de tour sont transformés en digits. Une telle fonction de tour est, par exemple, basée sur l'algorithme de hachage SHA-1 (Secure Hash Algorithm, pour algorithme de hachage sécurisé). On obtient par cette construction une permutation pseudo-aléatoire dans un ensemble d'éléments composés de digits. La permutation, c'est-à-dire le caractère bijectif, est garantie par construction, par l'utilisation d'un schéma de Feistel. L'aspect pseudo-aléatoire est lui garanti car aucune attaque cryptographique connue ne vient à bout de ce mode de chiffrement du fait que l'on utilise ici au moins 5 tours.

L'invention a donc pour objet un procédé de génération d'une permutation pseudo-aléatoire d'un mot comportant N digits dans lequel:

- on met en oeuvre un schéma de Feistel (202-205) généralisé,
- les fonctions de tours du schéma de Feistel généralisé mis en oeuvre sont des fonctions (Fi) telles que :

  - les mots d'entrée des fonctions de tours sont produits par la conversion de mots en digits en mots binaires,

- puis sur ces mots binaires est appliquée une fonction à sens unique,
- enfin, la sortie en digits est une fonction de ces mots binaires.

- on lit dans une mémoire (104) un mot en digits à chiffrer,

caractérisé en ce que:

- La fonction à sens unique est la fonction de hachage SHA-1
- le schéma de Feistel généralisé utilisé comporte au moins T = 5 tours et au maximum T = 30 tours.

L'invention sera mieux comprise à la lecture de la description qui suit et à l'examen des figures qui l'accompagnent. Celles ci sont présentées à titre indicatif et nullement limitatif de l'invention. Les figures montrent :

- Figure 1: une illustration de moyens utiles à la mise en oeuvre du procédé selon l'invention ;
- Figure 2 : une illustration d'étapes du procédé selon l'invention.

De manière générale, les actions décrites sont entreprises par un dispositif comportant un microprocesseur et une mémoire comportant des codes instructions pour commander ce microprocesseur. Ces codes instructions correspondent à la mise en oeuvre des étapes du procédé selon l'invention. Un mot, qu'il soit binaire ou en digits, est une représentation électrique, ou encore un signal électrique, d'une grandeur dans une mémoire ou un registre. Lorsque l'on prête une action à un appareil, celle-ci est réalisée par un microprocesseur de cet appareil commandé par des codes instructions enregistrés dans une mémoire de cet appareil.

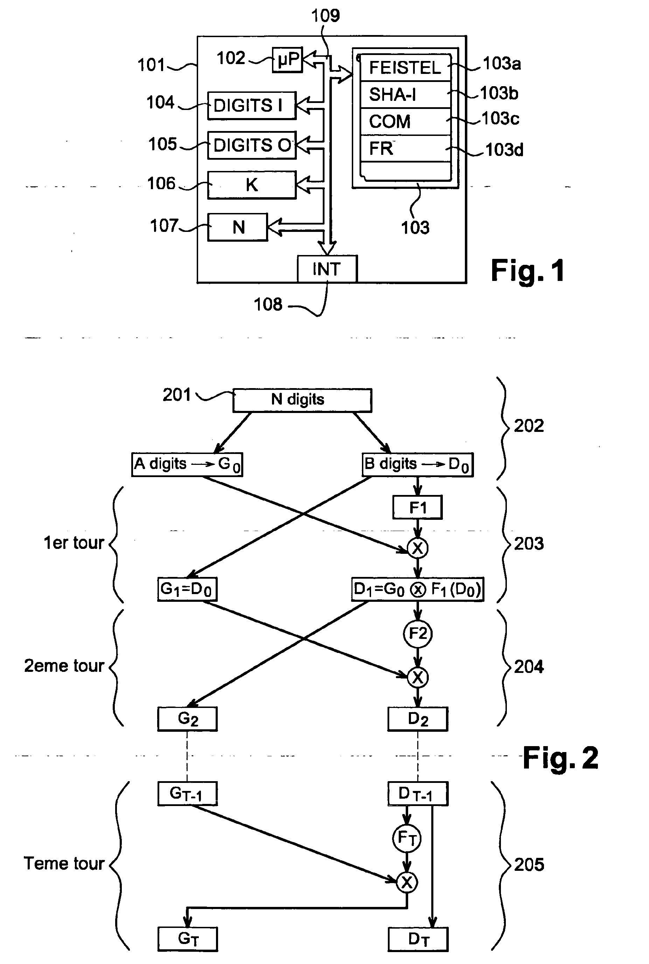

La figure 1 montre un appareil 101 mettant en oeuvre le procédé selon l'invention. Les étapes du procédé selon l'invention sont donc mises en oeuvre par l'appareil 101. Un tel appareil est dans la pratique un serveur d'un opérateur d'un réseau de télécommunications. Cependant, le procédé selon l'invention peut être mis en oeuvre par tout dispositif ou système correspondant à la figure 1. Pour l'exemple on cite comme appareil susceptible de mettre en oeuvre le procédé selon l'invention: un téléphone mobile, un assistant personnel, un ordinateur qu'il soit portable, fixe, ou en rack... la liste n'est pas exhaustive.

La figure 1 montre que l'appareil 101 comporte un microprocesseur 102, une mémoire 103 de programme, une mémoire 104 de mot en digits d'entrée, une mémoire 105 de mot en digits de sortie, une mémoire 106 de clé, une mémoire 107 de nombre de tours, et des circuits 108 interface. Les éléments 102 à 108 sont interconnectés par un bus 109.

Sur la figure 1 les mémoires 103 à 107 sont représentées comme des mémoires séparées. Dans la pratique ces mémoires peuvent très bien n'être qu'un seul et même composant mémoire, ou un composant mémoire et des registres d'un circuit spécialisé (ASIC).

La mémoire 104 permet d'enregistrer un mot en digits qui doit être chiffrer/crypter par le procédé selon l'invention. La mémoire 105 permet d'enregistrer le résultat du chiffrement, par le procédé selon l'invention, du mot enregistré dans la mémoire 104. La mémoire 106 permet d'enregistrer une clé utilisée par le procédé de chiffrement selon l'invention. La mémoire 107 permet d'enregistrer le nombre de tours du schéma/réseau de Feistel du procédé selon l'invention.

La mémoire 103 est divisée en plusieurs zones correspondant à différentes fonctions mises en oeuvre par le microprocesseur 102. Une zone 103a comporte des codes instructions correspondant à la mise en oeuvre d'un schéma de Feistel. Une zone 103b comporte des codes instructions correspondant à la mise en oeuvre d'une fonction de hachage, dans notre exemple SHA-1. Une zone 103c correspond à la mise en oeuvre de fonctions de communication, plus particulièrement les codes instructions de la zone 103c permettent de commander les circuits 108. Une zone 103d comporte des codes instructions pour la mise en oeuvre d'une fonction de tour.

La mémoire 103 comporte d'autres zones, de travail et de stockage, non représentées sur la figure 1.

Les circuits 108 permettent de connecter l'appareil 101 à des dispositifs extérieurs, comme un réseau, un clavier, un écran. C'est via ces circuits 108, et les codes instructions de la zone 103c, qu'il est possible de lire et/ou d'écrire dans les mémoires 104 à 107 qui sont aussi des mémoires de paramétrage/configuration du procédé selon l'invention.

La figure 2 illustre le fonctionnement d'un schéma de Feistel généralisé selon l'invention. La figure 2 montre une étape 201 préliminaire dans laquelle un utilisateur saisit le mot en digits que l'on souhaite chiffrer. Cette saisie consiste à écrire le mot M en digits à chiffrer dans la mémoire 104. Dans l'étape 201 l'utilisateur renseigne aussi le contenu de la mémoire 106 de clé, ainsi que le contenu de la mémoire 107 de nombre de tours. La mise à jour de ces mémoires se fait via les circuits 108.

On passe alors à la première étape du procédé de chiffrement proprement dit, il s'agit d'une étape 202 de découpage et de conversion du mot M en digits en deux mots G0 et D0 binaires. Ce découpage est tel que M = [G0, D0]. Par construction et définition, G0 est la partie gauche de M et D0 est la partie droite de M. Nous considérons pour l'exemple que M comporte 10 digits, c'est-à-dire que N vaut 10. Dans le cas d'un schéma de Feistel standard le mot à chiffrer est découpé en deux parties d'égale longueur. Nous discuterons du schéma de Feistel généralisé ultérieurement. Dans notre exemple G0 et D0 sont donc des mots binaires correspondant chacun à 5 digits. Dans cet exemple on a donc A = B = 5, où A est la longueur en digit du mot G0, et B est la longueur en digit du mot D0.

Un mot en digits a une représentation binaire en mémoire. Cette représentation est la plupart du temps une suite de quartets (4 bits), ou respectivement une suite d'octets (8 bits, pour le code ASCII). Chaque quartet, respectivement octet, correspond alors à un digit. Si nous considérons le cas de l'emploi de quartet, de manière connue, la conversion d'un mot en digits en un mot en binaire se fait alors simplement par la juxtaposition des mots binaires correspondant à chaque digit. Ainsi 0 correspond au quartet 0000, 1 au quartet 0001, 2 au quartet 0010, ... ainsi de suite jusqu'à 9 qui correspond au quartet 1001. Avec ce mode de codage la conversion binaire, par exemple, du mot en digits 12345 est le mot binaire 00010010001101000101 composé de 5 quartets.

Il existe une autre manière de convertir un mot en digits en un mot binaire, cette autre manière est celle du mode de réalisation préféré de l'invention. Cette autre manière de conversion consiste à convertir un mot en digits en utilisant le mot binaire ayant la même valeur décimale que le mot en digits lu. Ainsi le mot en digits 12345 est converti en un mot binaire correspondant à sa valeur décimale, soit le mot binaire 11000000111001.

A la fin de l'étape 202, on a donc découpé le mot M en digits en deux mots G0 et D0 binaires. Par exemple, si le mot en digits est 1234567890, alors G0 est la conversion en binaire de 12345, et D0 est la conversion en binaire de 67890. On passe alors à une étape 202 ou premier tour du schéma de Feistel selon l'invention.

Dans l'étape 202 on calcule un mot binaire G1 qui est en fait égal à D0. On calcule aussi un mot binaire D1 tel que D1 = G0 $\oplus$ F1 (D0). Dans cette expression le symbole $\oplus$ correspond à un "ou exclusif" aussi connu sous le nom de fonction XOR. La fonction F1 est la fonction de tour du premier tour du schéma de Feistel selon l'invention. De manière générale, on note Fi la fonction de tour du i-ème tour du schéma de Feistel selon l'invention. La fonction Fi s'exprime par exemple comme suit:

$$Fi(x) = < SHA\_1(i \,||\, K \,||\, x \,||\, j) > (1).$$

Dans cette expression SHA_1 () est la fonction de hachage du même nom. Dans la pratique on peut employer un autre algorithme de hachage comme MD5 par exemple. On peut aussi employer une autre fonction comme AES (Advanced Encryption Standard, pour standard de chiffrement avancé), TDES (Triple Data Encryption Standard, pour triple standard de chiffrement de données). Il s'agit là de fonctions pseudo-aléatoires standards de cryptographie sur des mots binaires. De manière plus générale on peut employer n'importe quelle fonction ou fonction pseudo-aléatoire sur des bits.

|| est un opérateur de concaténation, K est la clé qui est lue dans la mémoire 106, i est l'indice du tour de la fonction de Feistel. La notation < || j> signifie que l'on initialise j à 0, puis que l'on extrait les 17 bits de poids fort de la sortie de la fonction SHA_1. Si ces 17 bits correspondent exactement à 5 digits, on garde cette sortie, sinon on augmente j d'une unité et on réévalue l'expression (1) jusqu'à avoir cette propriété. Cette itération sur j correspond en fait à une conversion d'un nombre binaire en nombre en digits. Les mots d'entrée des fonctions de tours sont donc produits par la conversion de mots en digits en mots binaires. Les mots binaires de sortie des fonctions de tours sont donc convertis en mots en digits. Pour que 17 bits correspondent exactement à 5 digits, il faut que la conversion en décimal de ce mot de 17 bits s'exprime avec 5 chiffres.

Le fait que l'on extrait 17 bits est lié au fait que l'on travaille avec des mots de 5 digits de longueur. Plus particulièrement cela est lié au fait que la fonction de tour considérée produit un mot de 5 digits. Dans la pratique le nombre de bits extraits est lié à la longueur du mot en digits produit par la considération suivante: le nombre de bits extraits correspond à la longueur d'un mot binaire permettant de coder la plus grande valeur décimale représentable avec le nombre de digits du mot produit. Ainsi, avec 5 digits, la plus grande valeur décimale représentable est 99 999. Il faut 17 bits pour coder cette valeur en binaire. Si on considère, par exemple, un mot de 7 digits, alors la plus grande valeur décimale représentable est 9 999 999. Dans ce cas, il faut extraire 24 bits. Ce raisonnement s'applique à n'importe quel nombre de digits.

Dans une variante, l'itération sur j s'arrête dès que les bits extraits correspondent à une valeur décimale représentable par le nombre de digits à produire par la fonction de tour.

On rappelle ici que les mots traités ont une longueur de 5 digits car le mot M a une longueur de 10 digits et qu'il a été séparé en 2 mots de 5 digits chacun.

La fonction décrite par l'expression (1) est non réversible, c'est à dire à sens unique, car elle met en oeuvre une fonction de hachage elle-même non réversible. Non réversible signifie que l'on est incapable de déterminer l'entrée d'une fonction en connaissant sa sortie. D'une manière générale l'irréversibilité de la fonction de tour est liée au fait que l'on extrait un certain nombre de bits de sa sortie, et donc qu'il ne peut s'agir d'une bijection.

A la fin de l'étape 203 on a donc un mot M1 = [G1, D1]. On passe alors à une étape 204 de calcul d'un mot M2 = [G2, D2] avec G2 = D1, et D2 = G1 $\oplus$ F2(D1). L'étape 204 est le deuxième tour du schéma de Feistel selon l'invention. L'étape 204 est identique à l'étape 203 si ce n'est que l'étape 204 travaille sur le mot M1 alors que l'étape 203 travaille sur le mot M.

Dans le cas général, dans un schéma de Feistel, le i-ème tour produit un mot Mi = [Gi, Di] avec $G_i = D_{i-1}$ et $D_i = G_{i-1} \oplus F_i(D_{i-1})$.

Dans notre exemple on considère un schéma de Feistel à 5 tours, donc T vaut 5. Ainsi, après l'étape 204 on effectue les troisième et quatrième tours comme décrit pour le cas général.

Lors du T-ième tour, ici le cinquième tour et l'étape 205, on produit un mot $M_T = [G_T, D_T]$. Avec GT = $G_{T-1} \oplus F_T(D_{T-1})$, et $D_T = G_{T-1}$ . Le mot $M_T$ peut ainsi être utilisé comme entrée du schéma de Feistel avec le clé K et on retrouvera en sortie le mot M de départ. Le mot $M_T$ est le résultat du chiffrement du mot M par le procédé selon l'invention. A la fin de l'étape 205, le mot $M_T$ est écrit dans la mémoire 105. Une écriture résumée du procédé selon l'invention est d'écrire:

$$M_T = Chi(M, K, T),$$

expression qui doit être lue comme $M_T$ est le résultat du chiffrement (Chi) de M par le procédé selon l'invention avec la clé K, et un nombre de tours égal à T. La fonction de déchiffrement est alors la même, et on a:

$$M = Chi(M_T, K, T)$$

La mémoire 105 est lue via les circuits 108 ce qui permet d'utiliser le résultat du chiffrement.

Dans notre exemple le schéma de Feistel comporte T = 5 tours. Dans une mise en oeuvre préférée, le schéma de Feistel comporte 6 tours. Dans la pratique on peut aller jusqu'à 30 tours. Cependant il faut savoir faire un compromis avec la rapidité d'exécution. En effet, plus le nombre de tours est important, plus le temps de calcul croît. Dans la pratique 6 tours suffisent à se prémunir contre toutes les attaques connues non basées sur la force brute. Avec la puissance de calcul disponible actuellement on peut monter jusqu'à 30 tours sans détériorer sensiblement les temps de réponse d'un système mettant en oeuvre le procédé selon l'invention. Dans la pratique le nombre de tour T est donc inférieur à 30.

Dans l'exemple de la description on a considéré que le mot M comporte 10 digits. Dans la pratique le mot M peut comporter un nombre impair de digits. Dans la pratique aussi on peut effectuer un découpage non symétrique du mot M. Dans ces deux cas on met en oeuvre un schéma de Feistel généralisé, c'est-à-dire tel que A est différent de B. On note que le cas A = B, est un cas particulier du schéma généralisé.

Considérons par exemple que M comporte N = 11 digits. Considérons alors que A vaut 5 et B vaut 6. On a bien N = A + B. On a aussi G0 à une longueur de 5 digits et D0 a une longueur 6 digits. A la fin du premier tour de la fonction de Feistel généralisée, on a G1 = D0 comporte 6 digits, et D1 = G0 $\oplus$ F1 (D0) comporte 5 digits. Dans ce cas la fonction F1 travaille sur un mot d'une longueur de 6 digits pour produire un mot d'une longueur de 5 digits et donc on extrait 17 bits de la sortie de la fonction SHA_1, tel que précédemment décrit.

A la fin du deuxième tour du schéma de Feistel, on a G2 = D1, comporte 5 digits. On a aussi D2 = G1 $\oplus$ F2(D1), comporte 6 digits. Dans ce cas la fonction F2 travaille sur un mot d'une longueur de 5 digits pour produire un mot d'une longueur de 6 digits, on extrait donc 20 bits de la sortie de la fonction SHA_1 selon les considérations déjà vues.

Dans le cas d'un schéma de Feistel généralisé, le découpage du mot à chiffrer n'est pas symétrique, les fonctions de tour ne travaillent donc pas sur le même nombre de digits selon que l'indice du tour est pair ou impair. Ainsi lors des tours d'indice impair la fonction de tour du schéma de Feistel travaille sur un mot de longueur B digits pour produire un mot de longueur A digits. Lors des tours d'indice pair, la fonction de tour du schéma de Feistel travaille sur un mot de longueur A digits pour produire un mot de longueur B digits.

D'une manière générale A et B peuvent prendre des valeurs quelconques tant que A + B = N. Dans la pratique, on préfère découper un mot en digits de manière symétrique. Dans le cas où N est pair cela ne pose pas de problème, on a A = B = N/2. Dans le cas où N est impair on pose alors que A vaut la partie entière de N/2, alors que B vaut N - A. On a bien ainsi A + B = N. Avec ce mode de découpage B n'est jamais supérieur de plus d'une unité à A, et on a donc un découpage entier le plus proche possible d'un découpage symétrique.

Ce procédé de chiffrement est utilisé pour chiffrer des mots en digits couramment utilisés. De tels mots sont des numéros de téléphones (8 à 10 digits), des numéros de cartes bleues (16 digits), des numéros de sécurité sociale (13 digits), des numéros de comptes en banques, des vouchers électroniques,..., la liste n'est pas exhaustive. De plus ces numéros peuvent être concaténés en un numéro plus grand de manière à atteindre un mot d'une longueur de 30 digits.

D'une manière générale, avec le procédé selon l'invention, plus le mot à chiffrer est long, c'est-à-dire plus N est grand, meilleure est la résistance à l'analyse cryptographique.

Pour un mot en entrée, une clé de chiffrement donnée et un nombre de tours du schéma de Feistel, on obtient toujours le même mot chiffré. De manière à renforcer le chiffrement et surtout à éviter les études de comportement basées sur un identifiant électronique, on peut concaténer un numéro en digits à chiffrer avec un aléa en digits. Par exemple, pour chiffrer un numéro de téléphone on le concatène d'abord avec le nombre de secondes écoulées depuis le début de l'heure courante. On chiffre alors le résultat de cette concaténation. Ainsi on n'obtient que très rarement le même mot chiffré pour un numéro de téléphone donné. Le type d'aléa utilisé est quelconque, il peut par exemple aussi s'agir d'un simple compteur augmentant à chaque utilisation, d'un nombre tiré d'une suite pseudo-aléatoire précalculée, la liste n'étant pas exhaustive.

Ainsi parmi les utilisations possibles du procédé selon l'invention on cite la possibilité de chiffrer des informations entre leur émetteur et leur destinataire. On cite aussi la possibilité d'isoler deux réseaux l'un de l'autre. Cette isolation est réalisée, par exemple, par un serveur de l'opérateur d'un premier réseau. Ce serveur transcode, avec le procédé selon l'invention, un identifiant du premier réseau pour produire un identifiant sur le deuxième réseau. Ainsi les entités agissant sur le deuxième réseau, à l'exception de l'opérateur du premier réseau, sont incapables d'identifier l'utilisateur du premier réseau.

L'invention s'applique donc particulièrement et très avantageusement à la téléphonie. Ainsi dans le cadre de la préservation de la vie privée des abonnés à un opérateur de téléphonie, et de la lutte contre le courrier non sollicité (aussi connu sous le nom de "spamming"), tous les protocoles utilisent le MSISDN (Numéro de téléphone international d'un abonné), codé sur 15 digits, comme identifiant de l'abonné et cette information peut alors être détournée par le fournisseur de services dans le but d'établir un profil de l'utilisateur, ou dans le but d'émettre des messages non sollicités. On peut chercher à cacher cette valeur par chiffrement mais il faut alors que le résultat soit compatible avec le format des protocoles de télécommunication et surtout que l'opérateur puisse facilement le déchiffrer. Ces deux buts sont atteints avec le procédé selon l'invention.

Le cas du voucher électronique est également un bon exemple d'application de l'invention. L'interface au niveau d'un téléphone mobile est limitée au clavier numérique, et donc l'utilisateur est limité dans sa saisie à des digits. Dans le cadre de la génération d'un voucher électronique (un numéro de voucher est équivalent à une valeur financière, par exemple 30 euros), chaque saisie de voucher permet de créditer un compte. La gestion des vouchers chez le fournisseur de services est simplifiée si le générateur de ces valeurs utilise des algorithmes symétriques travaillant sur des digits. Un compteur défile de 1 à M, et le chiffrement du compteur fournit des données pseudo-aléatoires toutes différentes. Il est ainsi possible de générer des codes pseudo-aléatoires sur N digits, facilement gérables par le fournisseur de services car on ne stocke que la dernière valeur de compteur utilisée, et non pas toutes les valeurs de vouchers déjà générées pour s'assurer de l'unicité de celles-ci.

De manière générale, dans les "grosses" bases de données, le stockage est fait en clair, la structure peut être composée (formats non homogènes, numérique et alphanumérique) et les besoins de sécurité imposent un chiffrement. Dans ce cas également, un chiffrement par digit permet de protéger efficacement les données et ce, sans en modifier la structure, et pour un coût économique très faible.

Ces exemples de mise en oeuvre de l'invention ne limite pas les domaines d'application de l'invention.

**Revendications**

1. Procédé de génération d'une permutation pseudo-aléatoire d'un mot comportant N digits dans lequel:

- on met en oeuvre un schéma de Feistel (202-205) généralisé,
- les fonctions de tours du schéma de Feistel généralisé mis en oeuvre sont des fonctions (Fi) telles que :

- les mots d'entrée des fonctions de tours sont produits par la conversion de mots en digits en mots binaires,
- puis sur ces mots binaires est appliquée une fonction à sens unique,
- enfin, la sortie en digits est une fonction de ces mots binaires,
- **caractérisé en ce que**: - la fonction à sens unique et la fonction de hachage SHA-1, on lit dans une mémoire (104) un mot en digits à chiffrer,
- le schéma de Feistel généralisé utilisé comporte au moins T = 5 tours et au maximum T = 30 tours.

2. Procédé selon la revendication 1 **caractérisé en ce que** le nombre de tours T du schéma de Feistel est égal à 6.

3. Procédé selon l'une des revendications 1 ou 2, **caractérisé en ce que** lors des tours impairs du schéma de Feistel la fonction de tour travaille sur un mot de longueur B, et lors des tours pairs du schéma de Feistel elle travaille sur des mots de longueur A digits, où A + B = N.

4. Procédé selon la revendication 3, **caractérisé en ce que** A vaut la partie entière de N / 2 et B vaut N - A.

5. Procédé selon l'une des revendications 1 à 4, **caractérisé en ce que** N est un nombre entier compris dans l'intervalle [7, 30].

6. Procédé selon l'une des revendications 1 à 5, **caractérisé en ce que** N est un nombre entier compris dans l'intervalle [10, 30].

7. Procédé selon l'une des revendications 1 à 6, **caractérisé en ce que** N est un nombre entier compris dans l'intervalle [13, 30].

**Claims**

1. A method for the generation of a pseudo-random generation of a word comprising N digits in which:

- a generalised Feistel network (202-205) is implemented,
- the round functions of the generalised Feistel network implemented are the functions (Fi) such that:

- the entry words for the round functions are produced by the conversion of digital words into binary words.
- then a one way function is applied to these binary words,
- finally, the output in digits is a function of these binary words,
- a word to encrypt in digits is read in a memory (104),

**characterised in that:**

- the one way function is the hashing function of SHA -1
- the generalised Feistel network used includes at least T = 5 rounds and a maximum T = 30 rounds.

2. A method according to claim 1 **characterised in that** the number of T rounds of the Feistel network is equal to 6.

3. A method according to claims 1 or 2 **characterised in that** on the odd rounds of the Fiestel network the round function works on a word of length B, and during the even rounds of the Feistel network it works on words of length A digits, where A+B = N.

4. A method according to claim 3, **characterised in that** the value of A is the whole part of N / 2, and N - A the value of B.

5. A method according to one of the claims 1 to 4, **characterised in that** N is a whole number included in the interval [7, 30].

6. A method according to one of the claims 1 to 5, **characterised in that** N is a whole number included in the interval [10, 30].

7. A method according to one of the claims 1 to 6, **characterised in that** N is a whole number included in the interval [13, 30].

**Patentansprüche**

1. Verfahren zur Generierung einer pseudozufälligen Permutation eines Wortes mit N Digits, bei dem:

- man ein erweitertes Feistelnetzwerk (202-205) zur Anwendung bringt,
- die Runden-Funktionen des angewandten erweiterten Feistelnetzwerks Funktionen (Fi) sind, wie beispielsweise folgende:

- die Eingangswörter der Runden-Funktionen werden durch die Umwandlung von Wörtern in Digits in binäre Wörter erzeugt,
- auf diese binären Wörter wird danach eine Einbahn-Funktion angewandt,
- der Ausgang in Digits ist schließlich eine Funktion dieser binären Wörter,
- man liest in einen Speicher (104) ein zu chiffrierendes Wort in Digits ein,

**dadurch gekennzeichnet, dass:**

- die Einbahn-Funktion die Hash-Funktion SHA-1 ist,
- das verwendete erweiterte Feistelnetzwerk zumindest T = 5 Runden und höchstens T = 30 Runden umfasst.

2. Verfahren nach Anspruch 1, **dadurch gekennzeichnet, dass** die Anzahl der Runden T des Feistelnetzwerks gleich 6 ist.

3. Verfahren nach einem der Ansprüche 1 oder 2, **dadurch gekennzeichnet, dass** die Runden-Funktion bei den ungeraden Runden des Feistelnetzwerks an einem Wort der Länge B arbeitet, und sie bei den geraden Runden des Feistelnetzwerks an einem Wort der Länge A Digits arbeitet, wobei A + B = N ist.

4. Verfahren nach Anspruch 3, **dadurch gekennzeichnet, dass** A den gesamten Teil von N/2 wert ist, und B N - A wert ist.

5. Verfahren nach einem der Ansprüche 1 bis 4, **dadurch gekennzeichnet, dass** N eine ganze Zahl ist, die im Intervall [7, 30] enthalten ist.

6. Verfahren nach einem der Ansprüche 1 bis 5, **dadurch gekennzeichnet, dass** N eine ganze Zahl ist, die im Intervall [10, 30] enthalten ist.

7. Verfahren nach einem der Ansprüche 1 bis 6, **dadurch gekennzeichnet, dass** N eine ganze Zahl ist, die im Intervall [13, 30] enthalten ist

**Fig. 1**

**Fig. 2**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Ciphers with Arbitrary Finite Domains. **BLACK ; ROGAWAY.** Topics in Cryptology, CT-RSA 2002; The Cryptographers' Track at the RSA Conference 2002, Proceedings. Springer-Verlag, 18 Février 2002, vol. 2271, 114-130